# EUROPÄISCHE PATENTSCHRIFT

(11) **EP 0 982 241 B1**
(45) Veröffentlichungstag und Bekanntmachung des Hinweises auf die Patenterteilung: **18.08.2004**
(21) Anmeldenummer: 99109924.3
(22) Anmeldetag: 20.05.1999
(51) Int. Cl.: B65G 1/137

(54) **Verfahren zum Behandeln von Artikeln im Versandhandel**
Process for the handling of articles in mail-order trade
Procédé pour la manutention d'articles dans une entreprise de vente par correspondance

(30) Priorität: 24.08.1998 DE 19838319
(43) Veröffentlichungstag der Anmeldung: 01.03.2000
(73) Patentinhaber: Papst Logistic Licensing GmbH & Co. KG, 78112 St. Georgen (DE)
(72) Erfinder: Christ, Ferdinand, 91575 Windsbach (DE); Rolz, Gerhard, 90513 Zirndorf (DE)
(74) Vertreter: Schneck, Herbert, Dipl.-Phys., Dr.

(56) Entgegenhaltungen:
- EP-A- 0 183 074
- EP-A- 0 209 750
- EP-A- 0 431 823
- EP-A- 0 615 926
- DE-A- 4 332 315
- DE-U- 9 104 290
- DE-U- 9 407 577
- DE-U- 29 720 655

## Beschreibung

Die Erfindung betrifft ein Verfahren zum Behandeln von Artikeln im Versandhandel, insbesondere von Softgood-Artikeln oder Hardgood-Artikeln.

Im Versandhandel besteht das Problem, daß bestellte Gegenstände vom Besteller ohne weiteres zurückgegeben werden können. Solche Retouren genannten Artikel müssen der Wiederversendung zugeführt werden, da es sich in der Regel um noch wiederversendbare Artikel, die also noch nicht beschädigt oder dergleichen sind, handelt. Hieraus ergeben sich aber eine Reihe von Problemen, die insbesondere mit dem beachtlichen Retourenaufkommen zusammenhängen, welches mehrere zehntausend Artikel pro Tag ausmachen kann. Einerseits erfolgt die Wiederversendung dadurch, daß die Retouren in die ursprünglichen Lagerfächer zurückgelagert werden, was nur manuell erfolgen kann und äußerst aufwendig ist. Im Hinblick auf die großen Stückzahlen ist dieses System kaum praktikabel. Ferner ist es bekannt, ein eigenes Retourenlager zu schaffen, in dem die in ihrer Art erfaßten Retouren eingebracht und im Bedarfsfall kommissioniert werden. Ein solches Verfahren ist aus DE 43 32 315 C2 bekannt. Im Rahmen dieses Verfahrens werden jeweils mehrere Retouren in einen Lagerbehälter eingeschlichtet und in ein Retourenlager gebracht, in dem sie dann im Bedarfsfall manuell zu entnehmen sind. Wenngleich sich dieses Verfahren im Einsatz bewährt hat, ist es hinsichtlich der Dauer vom Eingang der Retoure bis zur möglichen Wiederversendung derselben doch relativ langsam, da eine Vielzahl von Handlingschritten vorzunehmen sind.

Eine Kommissioniervorrichtung mit einer Mehrzahl von Aufnahmefächem, die jeweils zur Aufnahme eines Artikels ausgebildet sind, wobei sowohl die Artikel als auch die Aufnahmefächer jeweils eine Kennung aufweisen, die untereinander zugeordnet werden können, ist aus der EP 0 615 926 A1 bekannt.

Weitere Kommissionieranlagen und -verfahren sind bekannt aus der EP 0 431 823 A1, der EP 0 183 074 A1, der DE 94 07 577 U1 und der EP 0 209 750 A1.

Eine Anzeigevorrichtung für Regalplätze ist bekannt aus der DE 91 04 290 U1.

Die DE 297 20 655 U1 offenbart ein eine Mehrzahl von Fächern aufweisendes Regal mit einer Zugriffssicherung.

Aus der DE 43 32 315 A1 ist ein Verfahren zum Verteilen von Retouren im Versandhandel bekannt.

Der Erfindung liegt zumindest das Problem zu Grunde, ein Verfahren der eingangs genannten Art anzugeben, welches ein zügiges Wiederversenden eingegangener Retouren bei gleichzeitiger Einfachheit des Verfahrens ermöglicht.

Diese Aufgabe ist erfindungsgemäß gelöst durch ein Verfahren mit den Merkmalen nach Anspruch 1.

Vom erfindungsgemäßen Verfahren wird vorteilhaft jeder einzelne Retouren-Artikel in ein separates Aufnahmefach einer Kommissioniervorrichtung gegeben, wobei die Verteilung über sämtliche Aufnahmefächer chaotisch ist, d.h., ein beliebiges freies Aufnahmefach kann mit einem beliebigen Artikel belegt werden. Die vorteilhafte Verheiratung der Fachkennung und der Artikelkennung ermöglicht eine vollständige Transparenz der Belegung der Kommissioniervorrichtung, d. h., es ist zu jedem Zeitpunkt bekannt, wo welcher Artikel liegt. Ist ein entsprechender Bestellauftrag eingegangen, kann der jeweilige Artikel ohne weiteres entnommen werden, wobei sich die Entnahme äußerst einfach gestaltet, da keine mehreren Artikel innerhalb eines Faches vorhanden sind. Sobald die Verheiratung erfolgt ist, kann theoretisch bereits die Kommissionierung oder die Wiederkommissionierung erfolgen. Das erfindungsgemäße Verfahren ist damit wesentlich schneller hinsichtlich der möglichen Versendung insbesondere von Retouren als bisher bekannte Verfahren. Dabei kann im Falle einer erforderlichen Kommissionierung der Artikel automatisch aus dem Aufnahmefach abgegeben werden, d. h., am Aufnahmefach sind entsprechende automatisch bedienbare Ausgabeeinrichtungen, beispielsweise Klappen, vorhanden, die sich im Bedarfsfall öffnen, so daß der Artikel aus dem Fach fallen kann. Zusätzlich oder alternativ kann auch eine manuelle Entnahme zu Kommissionierzwecken möglichen sein, wobei in diesem Fall zweckmäßigerweise das jeweilige Aufnahmefach, in dem der zu entnehmende Artikel liegt, mittels geeigneter Anzeigemittel, beispielsweise in Form einer Leuchtdiode, angezeigt werden.

Um sicherzustellen, daß ein Bestellauftrag für einen bestimmten Artikel primär durch Kommissionieren eines ggf. vorliegenden Artikels abgearbeitet wird, so daß primär der Retourenspeicher geleert wird, ist erfindungsgemäß vorgesehen, daß bei Vorliegen eines Kommissionierauftrags für einen Artikel zuerst das Vorhandensein des Artikels in einer die Retouren beinhaltenden Kommissioniervorrichtung geprüft wird, wobei im Fall des Vorliegens die Retoure kommissioniert wird. Nur für den Fall, daß der betreffende Artikel nicht als Retoure vorhanden ist, erfolgt die Kommissionierung aus dem Haupt- oder Verteilerlager, je nach dem wie das Gesamtlager strukturiert ist. Prinzipiell jedoch soll zunächst die Retoure kommissioniert werden, diese haben vorrangige Priorität, um ein möglichst schnelles zyklisches Räumen der Kommissioniervorrichtung zu garantieren.

Die Artikel bzw. Retouren können erfindungsgemäß manuell und/oder automatisch in die Aufnahmefächer eingegeben werden. Im Falle einer manuellen Beschickung werden diese in einfacher Weise in die Aufnahmefächer gelegt, geschoben oder geworfen, je nachdem wie die Kommissioniervorrichtung strukturiert ist und um welche Artikel es sich handelt. Zur Erfassung der relevanten Kennungen kann im Fall einer manuellen Beschickung erfindungsgemäß vorgesehen sein, daß die Kennung des jeweiligen Aufnahmefachs und des Artikels mittels einer elektronischen Lese- oder Erfassungseinrichtung, insbesondere einem Scanner eingelesen oder erfaßt und/oder mittels einer Eingabeeinrichtung, insbesondere einer Tastatur eingegeben werden. Dies ist insoweit insbesondere unter Verwendung eines Barcode-Scanners problemlos möglich, die bearbeitende Person muß mit dem Scanner lediglich die jeweiligen Labels einmal am Aufnahmefach, zum anderen an dem Artikel abtasten, wonach seitens der Rechnereinrichtung bereits die Verheiratung der Daten erfolgt. Zweckmäßigerweise kann hierzu ein Funkscanner, ggf. mit Tastatur, welche zusätzlich das manuelle Eingeben ermöglicht, verwendet werden. Anstelle des beschriebenen manuellen Einlesens" der Fachkennung mittels der Lese- oder Erfassungseinrichtung kann alternativ vorgesehen sein, daß die Kennung des Aufnahmefachs bei Belegung desselben automatisch erfaßt wird, beispielsweise mittels Lichtschranken oder dergleichen, die betätigt werden, wenn der Artikel in das Fach eingegeben wird. In diesem Fall ist lediglich noch die Artikelkennung zu erfassen. Im Fall einer automatischen Beschickung ist erfindungsgemäß ebenfalls lediglich die Kennung des Artikels mittels einer elektronischen Lese- oder Erfassungseinrichtung, insbesondere einem beigegebenen Belegs das entsprechende Mutterfach" im Haupt- oder Verteilerlager angegeben, um die jeweilige Retoure dorthin zurücklagern zu können. Auch das Mutterfach" kann ein entsprechender Kommissionierparameter sein, da zweckmäßigerweise nur solche Retouren in das Haupt- oder Verteilerlager zurückgelagert werden können, die dort ein Mutterfach haben. Ferner kann ein Batch-Rhythmen-Betrieb erfolgen.

Nach erfolgter Kommissionierung kann erfindungsgemäß der jeweilige Artikel auftragsabhängig etikettiert und/oder verpackt und ggf. versandfertig gemacht werden, alternativ hierzu kann er zur Komplettierung einer Artikelgruppe mit anderen Artikeln zusammengeführt werden, beispielsweise wenn der Bestellauftrag noch weitere Artikel umfaßt.

Einsetzbar im Rahmen des erfindungsgemäßen Verfahrens ist eine Kommissioniervorrichtung mit mehreren vertikal und/oder horizontal angeordneten Aufnahmefächern. Diese zeichnet sich dadurch aus, daß mehrere zur Aufnahme lediglich eines Artikels ausgebildete Aufnahmefächer vorgesehen sind, wobei Mittel vorgesehen sind, mittels denen bei Belegung eines Aufnahmefachs mit einem Artikel eine jedem Aufnahmefach zugeordnete Kennung und eine jeden Artikel zugeordnete Kennung erfaßbar und/oder an eine zugeordnete Rechnereinrichtung gebar sind.

Dabei können die Mittel einer Einrichtung zum Lesen oder Erfassen der Kennung des Aufnahmefachs und/oder des Artikels und/oder zum manuellen Eingeben der jeweiligen Kennung umfassen, wobei hierzu zweckmäßigerweise eine manuell zu bedienende Funklese- oder Erfassungseinrichtung, vorzugsweise ein Funkscanner und/oder eine vorzugsweise in den Scanner integrierte Tastatur verwendet werden kann. Die Kennung kann mittels eines Transponders gegeben werden, wobei die Lese- oder Erfassungseinrichtung zum Erfassen dieser speziellen Kennung ausgebildet ist. Daneben kann ein Bar-Code verwendet werden. Zusätzlich oder alternativ hierzu können die Mittel zur automatischen Erfassung und/oder Übermittlung der Kennung an die Rechnereinrichtung bei Beschicken des Aufnahmefachs ausgebildet sein, wo zu zweckmäßigerweise jedem Aufnahmefach ein Sensorelement z. B. in Form einer Lichtschranke, zuordnet ist, welches bei Beschickung des Aufnahmefachs ein die Kennung darstellendes oder die Gabe der Kennung anstoßendes Sensorsignal liefert. Wird also vorteilhaft das Sensorelement betätigt, wird ein Signal gegeben, welches entweder die Fachkennung selbst darstellt, oder aber die Gabe der Kennung, beispielsweise mittels einer nachgeschalteten Prozessoreinheit, anstößt.

Die Kommissioniervorrichtung kann erfindungsgemäß zur manuellen und/oder automatischen Beschickung der Artikel ausgebildet sein. Insbesondere für das manuelle Beschicken, vor allem aber für das manuelle Erfassen der Fachkennung mittels des Scanners hat es sich als vorteilhaft erwiesen, wenn die Aufgabeöffnungen und/oder die die Kennung zeigenden Abschnitte der vertikal übereinander angeordneten Aufnahmefächer zumindest teilweise in horizontaler Richtung versetzt zueinander angeordnet sind, wobei sich im Hinblick auf die Körperbewegung der Bedienperson vorteilhaft eine Anordnung der Aufgabeöffnungen bzw. der Abschnitte längs einer bogenförmigen Linie als vorteilhaft erwiesen hat.

Ferner kann die Kommissioniervorrichtung zur manuellen und/oder automatischen Entnahme bzw. Abgabe der Artikel ausgebildet sein. Schließlich können Anzeigemittel für den Beschickungszustand jedes Aufnahmefachs, beispielsweise in Form von Leuchtdioden, vorgesehen sein.

Zur Vergrößerung der Kapazität der Kommissioniervorrichtung kann diese erfindungsgemäß zwei Reihen mit neben- und/oder übereinander angeordneten Aufnahmefächern aufweisen, zwischen denen ein Transportband oder dergleichen vorgesehen ist, auf welches die Artikel automatisch abgebbar ist, wobei dieses Transportband zweckmäßigerweise als Muldenband ausgebildet ist.

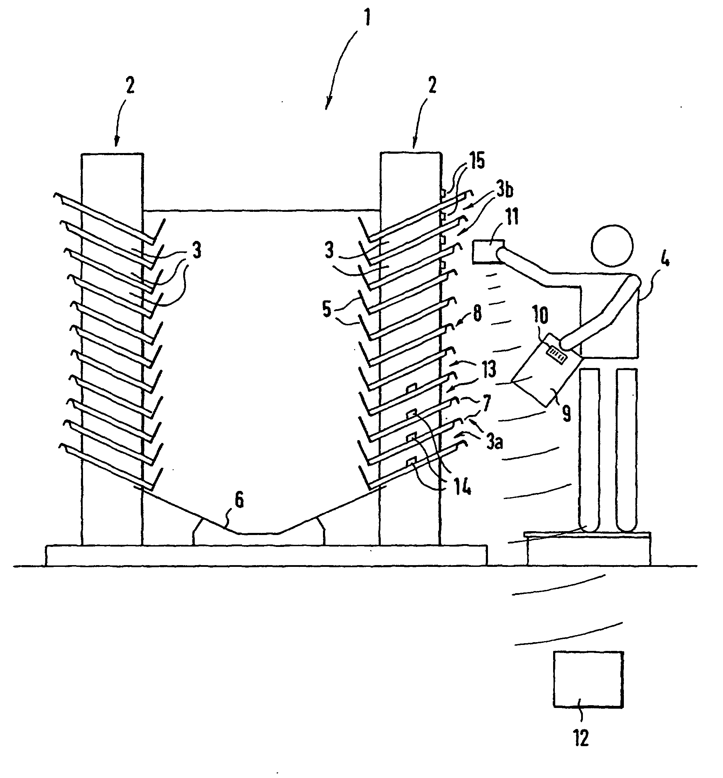

Vorteile, Merkmale und Einzelheiten der Erfindung ergeben sich aus dem wie folgt beschriebenen Ausführungsbeispiel sowie anhand der Zeichnung.

Diese zeigt in Form einer Prinzipskizze eine erfindungsgemäße Kommissioniervorrichtung 1. Diese besteht aus zwei Reihen 2, von denen jede mehrere übereinander und nebeneinander angeordnete Aufnahmefächer 3 aufweist. In jedes A nahmefach 3 kann ein Artikel, hier eine Retoure eingegeben werden, wobei sich bei den Artikeln bevorzugt um Softgood-Artikel handelt, also beispielsweise um in Folien eingeschweißte Bekleidungsstücke oder dergleichen. Die gezeigte Kommissioniervorrichtung ist zum manuellen Befüllen ausgebildet, d. h., die Bedienperson 4 legt die jeweilige Retoure manuell in das jeweilige schräg angeordnete Aufnahmefach. An den unteren Enden jedes Aufnahmefachs ist eine automatische Ausgabeeinrichtung 5, im gezeigten Beispiel in Form abklappbarer Bleche, angeordnet. Zum Ausgeben der jeweils eingebrachten Retoure wird rechen- gesteuert die Einrichtung 5 betätigt, so daß die Retoure auf das zwischen beiden Reihen angeordnete Transportband 6, im gezeigten Beispiel ein Muldenband, fallen kann.

Um zu wissen, welche Retoure in welchem Fach ist, was erforderlich ist, um diese gezielt kommissionieren zu können, sind einerseits an jedem Aufnahmefach entsprechende Abschnitte 7 vorgesehen, an dem jeweils eine Kennung 8 angeordnet ist. An jeder Retoure 9 ist ebenfalls eine Kennung 10 angebracht. Bei den Kennungen 8, 10 handelt es bevorzugter Weise um Barcodes, die mittels einer Les einrichtung in Form eines Funkscanners 11 durch einfaches Abtasten eingelesen werden können. Zum Einbringen der Retoure 9 wird mittels des Funkscanners 11 zunächst die Kennung 10 der Retoure 9 eingelesen und anschließend die jewei ge Kennung 8 des Aufnahmefachs 3, in welches die Retoure eingegeben wird. Die Kennungen werden an eine Rechnereinrichtung 12 übermittelt, die diese verheiratet, d. h., bei beiden Kennungen einander zuordnet. Damit ist transparer welche Retoure in welchem Aufnahmefach eingelagert ist. Liegt nur ein Bestellauftrag für diesen Artikel vor, wird zunächst gefragt, ob diese Retoure in der Kommissioniervorrichtung 1 vorhanden ist. Ist dies der Fall, wird über die Rechnereinrichtung 12 konkret dasjenige Aufnahmefach bzw. dessen Abgabeeinrichtung angesteuert, so daß die gewünschte Retoure abgegeben wird. Anstelle des Bar-Codes kann auch ein Transponder verwendet werden.

Wie die Figur ferner zeigt, sind die Öffnungen 13 der Aufnahmefächer 3 und damit auch die Abschnitte 7 versetzt zueinander angeordnet, so daß sich ein bogenförmiger Verlauf ergibt. Diese Anordnung ist aus ergonomischer Sicht von Vorteil und ermöglicht ein leichteres Einbringen der jeweiligen Retouren wie auch ein leichteres Scannen der Aufnahmefachkennung, da diese bogenförmige Ausbildung im wesentlichen den Bewegungsbereich des Funkscanners 11 entspricht. Selbstverständlich ist es auch möglich, bei niedrigerer Bauhöhe oder dergleichen eine geradlinige Anordnung vorzusehen.

Der Vollständigkeit halber sind zur Darstellung einer alternativen Ausführungsform einer Vorrichtung im Bereich der Aufnahmefächer 3a zwei Sensorelemente 14 dargestellt, beispielsweise handelt es sich hier um Lichtschranken. Diese Sensorelemente kommunizieren ebenfalls mit der Rechnereinrichtung 12 und liefern dieser automatisch bei Beschicken der Aufnahmefächer 3a mit einer Retoure die Fachkennung, d. h., die Bedienperson muß die Fachkennung nicht mehr manuell mittels des Funkscanners 11 einlesen. Gezeigt sind ferner im Bereich der Aufnahmefächer 3b vorgesehene Anzeigeeinrichtungen 15, beispielsweise in Form von Leuchtdioden, die den Belegungszustand eines Aufnahmefachs angeben, wobei dieser selbstverständlich ebenfalls über ein nicht dargestelltes Sensorelement erfaßt wird. Beispielsweise kann dies mittels der Sensorelemente 14 erfolgen, deren Signal dann entsprechend auch die Anzeigeeinrichtung 15 ansteuert. Auf diese Weise wird der Bedienperson 4 zu jeder Zeit angezeigt, wo noch freie, nicht belegte Aufnahmefächer vorhanden sind.

## Patentansprüche

1. Verfahren zum Behandeln von Artikeln im Versandhandel, wobei
- Retouren-Artikel chaotisch in ein lediglich einen Artikel aufnehmendes Aufnahmefach einer mehrere Aufnahmefächer aufweisenden Kommissioniervorrichtung gegeben werden, wobei die Kennung des Aufnahmefachs und die Kennung des Artikels seitens einer Rechnereinrichtung miteinander verheiratet werden, und ggf.
- bei Vorliegen eines Kornmissionierauftrags für einen Artikel zuerst das Vorhandensein des Artikels in der die Retouren beinhaltenden Kommissioniervorrichtung geprüft wird, wobei im Falle des Vorliegens die Retoure zuerst kommissioniert wird und der Artikel aus dem Aufnahmefach abgegeben wird.

2. Verfahren nach Anspruch 1, **dadurch gekennzeichnet, daß** im Fall einer erforderlichen Kommissionierung ein Artikel automatisch aus dem Aufnahmefach abgegeben wird.

3. Verfahren nach Anspruch 1, **dadurch gekennzeichnet, daß** im Fall einer erforderlichen Kommissionierung eines Artikels das jeweilige Aufnahmefach für eine manuelle Entnahme des Artikels angezeigt wird.

4. Verfahren nach einem der vorangehenden Ansprüche, **dadurch gekennzeichnet, daß** der Artikel manuell und/oder automatisch in die Aufnahmefächer eingegeben werden.

5. Verfahren nach Anspruch 4, **dadurch gekennzeichnet, daß** im Fall einer manuellen Beschickung der Aufnahmefächer die Kennung des Aufnahmefachs und des Artikels mittels einer elektronischen Lese- oder Erfassungseinrichtung, insbesondere einem Scanner eingelesen oder erfaßt und/oder mittels einer Eingabeeinrichtung, insbesondere einer Tastatur eingegeben wird.

6. Verfahren nach Anspruch 4 und 5, **dadurch gekennzeichnet, daß** im Fall einer automatischen oder einer manuellen Beschickung lediglich die Kennung des Artikels mittels einer elektronischen Leseoder Erfassungseinrichtung, insbesondere einem Scanner eingelesen oder erfaßt wird, und die Kennung des Aufnahmefachs bei Belegung desselben automatisch erfaßt wird.

7. Verfahren nach einem der Ansprüche 4 bis 6, **dadurch gekennzeichnet, daß** im Falle einer automatischen oder einer manuellen Beschickung sowohl die Kennung des Aufnahmefachs als auch die Kennung des Artikels automatisch erfaßt werden.

8. Verfahren nach einem der vorangehenden Ansprüche, **dadurch gekennzeichnet, daß** als Kennung ein Bar-Code eingelesen oder eingegeben wird.

9. Verfahren nach einem der vorangehenden Ansprüche, **dadurch gekennzeichnet, daß** als jeweilige Kennung oder als die jeweilige Kennung übertragender Mittel ein Transponder verwendet wird.

10. Verfahren nach Anspruch 5, **dadurch gekennzeichnet, daß** ein Funkscanner oder eine Funkerfassungseinrichtung, gegebenenfalls mit Tastatur verwendet wird.

11. Verfahren nach einem der vorangehenden Ansprüche, **dadurch gekennzeichnet, daß** die freien, belegbaren Aufnahmefächer mittels einer Anzeigeeinrichtung angezeigt werden.

12. Verfahren nach einem der vorangehenden Ansprüche, **dadurch gekennzeichnet, daß** der Betrieb der Kommissioniervorrichtung derart gezielt beeinflußbar ist, daß eine oder mehrere eingebrachte Artikel in Abhängigkeit eines oder mehrerer Kommissionierparameter automatisch ausgegeben werden, oder daß deren zu erfolgende Entnahme angezeigt wird.

13. Verfahren nach einem der vorangehenden Ansprüche, **dadurch gekennzeichnet, daß** die Abgabe oder Entnahme der Artikel im Batch-Rhythmen-Betrieb erfolgt.

14. Verfahren nach einem der vorangehenden Ansprüche, **dadurch gekennzeichnet, daß** nach erfolgter Kommissionierung der jeweilige Artikel auftragsabhängig etikettiert und/oder verpackt und gegebenenfalls versandfertig gemacht wird, oder daß der Artikel zur Komplettierung einer Artikelgruppe mit anderen Artikeln zusammengeführt wird.

## Claims

1. Process for handling articles in a mail-order business, wherein
- returned articles are placed in a disorderly manner in a receptacle that receives only one article, in an order picking device comprising a plurality of receptacles, wherein the identification of the receptacle and the identification of the article are married to each other on the part of a computer, and optionally,
- in the event of an article being ordered, it is first checked whether the article is present in the order picking device containing the returns, wherein, if it is present, the return is first ordered and the article then dispensed from the receptacle.

2. Process according to claim 1, **characterised in that** in the event of an order being required an article is automatically dispensed from the receptacle.

3. Process according to claim 1, **characterised in that** in the event of an order of an article being required the respective receptacle is displayed so that the article may be removed manually.

4. Process according to any one of the preceding claims, **characterised in that** the article is fed into the receptacle manually and/or automatically.

5. Process according to claim 4, **characterised in that** if the receptacles are supplied manually, the identification of the receptacle and the article is read in or detected by means of an electronic reading or detecting device, in particular a scanner, and/or is inputted by means of an inputting device, in particular a keyboard.

6. Process according to claims 4 and 5, **characterised in that** if the receptacles are supplied automatically or manually only the identification of the article is read in or detected by means of an electronic reading or detecting device, in particular a scanner, and the identification of the receptacle is detected automatically when said receptacle is filled.

7. Process according to any one of claims 4 to 6, **characterised in that** if the receptacles are supplied automatically or manually, both the identification of the receptacle and the identification of the article are detected automatically.

8. Process according to any one of the preceding claims, **characterised in that** a bar code is read in or inputted as the identification.

9. Process according to any one of the preceding claims, **characterised in that** a transponder is used as the respective identification or as the respective identification of transferring means.

10. Process according to claim 5, **characterised in that** a radio scanner or a radio detection device, optionally comprising a keyboard, is used.

11. Process according to any one of the preceding claims, **characterised in that** the free receptacles that may be filled are displayed by means of a display device.

12. Process according to any one of the preceding claims, **characterised in that** the operation of the order picking device may be purposefully influenced such that one or more inserted articles is/are automatically issued as a function of one or more order picking parameters, or **in that** the removal of said articles to be carried out is displayed.

13. Process according to any one of the preceding claims, **characterised in that** the articles are dispensed or removed in the batch cycle operation.

14. Process according to any one of the preceding claims, **characterised in that** once an order has been placed, the respective article is labelled and/or packaged as a function of the order, and optionally prepared for dispatch, or **in that** the article is combined with other articles in order to complete a group of articles.

## Revendications

1. Procédé pour la manutention d'articles dans une entreprise de vente par correspondance, dans lequel
- des articles retournés sont déposés de façon erratique dans un compartiment de réception ne recevant qu'un seul article d'un dispositif de préparation de commande présentant plusieurs compartiments de réception, où les identifications du compartiment de réception et de l'article sont appariées l'une à l'autre par un système informatique et, le cas échéant
- lorsqu'arrive un bon de préparation de commande concernant un article, la présence de l'article en question est tout d'abord vérifiée dans le dispositif de préparation de commande contenant les marchandises retournées, sachant que s'il est présent la marchandise retournée est intégrée en premier lieu à la préparation de commande et l'article est récupéré dans le compartiment de réception.

2. Procédé selon la revendication 1 **caractérisé en ce que**, en cas de préparation de commande nécessaire, un article est automatiquement prélevé du compartiment de réception.

3. Procédé selon la revendication 1 **caractérisé en ce que**, en cas de préparation de commande nécessaire concernant un article, le compartiment de réception en question est signalé pour prélèvement manuel de l'article.

4. Procédé selon l'une quelconque des revendications précédentes **caractérisé en ce que** l'article peut être déposé manuellement et/ou automatiquement dans les compartiments de réception.

5. Procédé selon la revendication 4 **caractérisé en ce que**, en cas de chargement manuel des compartiments de réception, les identifications du compartiment de réception et de l'article sont lues ou enregistrées au moyen d'un dispositif de lecture ou d'enregistrement électronique, en particulier au moyen d'un scanner, et/ou les identifications sont saisies au moyen d'un dispositif de saisie, en particulier au moyen d'un clavier.

6. Procédé selon l'une des revendications 4 et 5 **caractérisé en ce que**, en cas de chargement automatique ou manuel, seule l'identification de l'article est lue ou enregistrée au moyen d'un dispositif de lecture ou d'enregistrement électronique, en particulier au moyen d'un scanner, et **en ce que** l'identification du compartiment de réception est enregistrée automatiquement au remplissage de celui-ci.

7. Procédé selon l'une quelconque des revendications 4 à 6 **caractérisé en ce que**, en cas de chargement automatique ou manuel, l'identification du compartiment de réception tout comme celle de l'article est enregistrée automatiquement.

8. Procédé selon l'une quelconque des revendications précédentes **caractérisé en ce qu'**un code barres est lu ou saisi en tant qu'identification.

9. Procédé selon l'une quelconque des revendications précédentes **caractérisé en ce qu'**on met en oeuvre un transpondeur en tant que chaque identification ou en tant que moyen transmettant l'identification en question.

10. Procédé selon la revendication 5 **caractérisé en ce qu'**on emploie un scanner radio ou un dispositif d'enregistrement radio, le cas échéant doté d'un clavier.

11. Procédé selon l'une quelconque des revendications précédentes **caractérisé en ce que** les compartiments de réception libres pouvant être remplis sont signalés au moyen d'un dispositif indicateur.

12. Procédé selon l'une quelconque des revendications précédentes **caractérisé en ce que** le fonctionnement du dispositif de préparation de commande peut être modifié de façon ciblée de sorte qu'un ou plusieurs articles introduits soient extraits automatiquement en fonction d'un ou plusieurs paramètres de préparation de commande ou de sorte qu'il soit signalé pour que soit effectué le prélèvement.

13. Procédé selon l'une quelconque des revendications précédentes **caractérisé en ce que** l'extraction ou le prélèvement de l'article fonctionne par cycles de lots.

14. Procédé selon l'une quelconque des revendications précédentes **caractérisé en ce que**, une fois la préparation de commande effectuée, l'article en question est, suivant la commande, étiqueté et/ou conditionné et éventuellement préparé à l'expédition ou **en ce que** l'article est ajouté à d'autres articles afin de compléter un lot d'articles.
